# EUROPÄISCHE PATENTANMELDUNG

(11) **EP 3 718 826 A1**
(43) Veröffentlichungstag der Anmeldung: **07.10.2020**
(21) Anmeldenummer: 19166445.7
(22) Anmeldetag: 01.04.2019
(51) Int. Cl.: B60Q 1/26, B60Q 1/52

(54) **VORRICHTUNG ZUR BEREITSTELLUNG EINES WARNSIGNALS AN EINEM KRAFTFAHRZEUG, KRAFTFAHRZEUG UND VERWENDUNG**

(71) Anmelder: Ganzha, Dmitry, 1180 Wien (AT)
(72) Erfinder: Ganzha, Dmitry, 1180 Wien (AT)
(74) Vertreter: Rupprecht, Kay

(57) **Zusammenfassung**

Die Erfindung betrifft eine Vorrichtung (1) zur wenigstens bedarfsweisen Bereitstellung eines Warnsignals an einem Kraftfahrzeug, mit einer Gehäuseeinheit (10), die in einem expandierten Zustand eine Grundfläche einnimmt, mit einer Befestigungseinheit (20), die an einer Rückseite der Gehäuseeinheit (10) angeordnet ist, und mit einer Signaleinheit (30). Die Vorrichtung (1) ist entlang wenigstens einer ersten Längsachse (X) zusammenklappbar, sodass die Vorrichtung (1) in einem zusammengeklappten Zustand auf einen Teil der Grundfläche der Gehäuseeinheit (1) im expandierten Zustand reduzierbar ist. Die Vorrichtung (1) ist mittels dem Befestigungselement (20) an einer Scheibenfläche des Kraftfahrzeuges wenigstens zeitweise befestigbar. Des Weiteren betrifft die Erfindung ein Kraftfahrzeug und eine Verwendung der Vorrichtung (1).

## Beschreibung

Die Erfindung betrifft eine Vorrichtung zur wenigstens bedarfsweisen Bereitstellung eines Warnsignals an einem Kraftfahrzeug, ein Kraftfahrzeug mit einer solchen Vorrichtung sowie deren Verwendung.

Üblicherweise wird im Straßenverkehr mittels eines Warndreiecks auf eine Gefahrensituation wie ein defektes Kraftfahrzeug hingewiesen, wobei das Warndreieck in einem gewissen Abstand zu dem Kraftfahrzeug bzw. der Gefahrensituation positioniert wird, um den nachfolgenden Verkehr zu warnen.

Dabei müssen sich Personen in Gefahr bringen, um das Warndreieck entsprechend weit entfernt vom eigenen Kraftfahrzeug aufzustellen. Des Weiteren bedingt das Aufstellen des Warndreiecks auf der Straßenoberfläche eine sehr geringe Sichthöhe, sodass der Warnhinweis vom nachfolgenden Verkehr übersehen werden kann.

Alternativ bestehen Möglichkeiten, Warnhinweise auf z.B. einem Dach des Kraftfahrzeuges anzuordnen, um den Nachteil der geringen Sichthöhe des Warnsignals zu überwinden. Dieser Ansatz macht jedoch oftmals eine komplizierte Befestigung an einer schwer zugänglichen Stelle des Kraftfahrzeuges notwendig. Darüber hinaus sind solche Systeme oftmals kompliziert zusammenzusetzen bzw. handzuhaben und für Gefahrensituationen somit ungeeignet.

Der vorliegenden Erfindung liegt die Aufgabe zugrunde eine Vorrichtung zur Bereitstellung eines Warnsignales bzw. Warnhinweises anzugeben, die kostengünstig herzustellen ist, eine einfache Handhabung ermöglicht sowie eine platzsparende Unterbringung während der Lagerung, z.B. innerhalb des Kraftfahrzeuges, bereitstellt. Des Weiteren ist es Aufgabe der Erfindung ein Kraftfahrzeug mit einer solchen Vorrichtung anzugeben, sowie eine Verwendung einer solchen Vorrichtung.

Diese Aufgabe wird hinsichtlich der Vorrichtung gemäß dem Anspruch 1 gelöst, hinsichtlich des Kraftfahrzeuges gemäß dem Anspruch 9 und hinsichtlich der Verwendung gemäß dem Anspruch 10. Weitere vorteilhafte Ausgestaltungen der erfindungsgemäßen Gegenstände sind in den abhängigen Ansprüchen angegeben.

Die erfindungsgemäße Vorrichtung zur wenigstens bedarfsweisen Bereitstellung eines Warnsignals an einem Kraftfahrzeug, ist mit einer Gehäuseeinheit vorgesehen, die in einem expandierten Zustand eine Grundfläche einnimmt, mit einer Befestigungseinheit, die an einer Rückseite der Gehäuseeinheit angeordnet ist, und mit einer Signaleinheit. Die Vorrichtung ist entlang wenigstens einer ersten Längsachse zusammenklappbar, sodass die Vorrichtung in einem zusammengeklappten Zustand auf einen Teil der Grundfläche der Gehäuseeinheit im expandierten Zustand reduzierbar ist. Die Befestigungseinheit ist an einer Scheibenfläche des Kraftfahrzeuges wenigstens zeitweise befestigbar.

Die Erfindung basiert auf dem Grundgedanken, eine Warnhinweis-Vorrichtung, z.B. in Form eines Warndreiecks, derart auszugestalten, dass sie ein festes Gehäuse aufweist, welches in seiner Größe mittels eines Falt- bzw. Klappmechanismusses verkleinert werden kann. Somit kann die Vorrichtung auf einfache und platzsparende Weise im Fahrzeug an leicht zugänglichen Stellen griffbereit gelagert werden. Des Weiteren bietet ein Falt- bzw. Klappmechanismus einen leicht verständlichen bzw. nachvollziehbaren Ansatz, um die Verwendbarkeit der Vorrichtung im Gefahrenfall möglichst schnell herstellen zu können.

Des Weiteren ist vorgesehen, dass die Vorrichtung an einer Scheibenfläche des Kraftfahrzeuges anordbar ist. Somit kann die Vorrichtung an einer leicht zugänglichen Stelle befestigt werden, die keine umfangreiche Gefährdung für die Personen darstellt und dennoch eine optimierte Sichtbarkeit für den nachfolgenden Straßenverkehr bietet.

Die Vorrichtung ist mit einer Gehäuseeinheit vorgesehen, die in einem expandierten Zustand eine Grundfläche einnimmt. Der expandierte Zustand beschreibt den verwendungsgemäßen bzw. einsatzfähigen Zustand der Vorrichtung, also wenn ein Warnsignal bzw. ein Warnhinweis durch die Vorrichtung aktiv oder passiv ausgegeben bzw. emittiert bzw. reflektiert werden soll.

In diesem expandierten Zustand ist eine Unterseite der Gehäuseeinheit in ihrer seitlichen Erstreckung als die Grundfläche aufzufassen. Die Grundfläche beschreibt somit den Bauraum, den die Vorrichtung in eine Erstreckungsrichtung, im Wesentlichen in seitlicher Richtung, einnimmt.

Vorzugsweise ist die Vorrichtung entlang der wenigstens einen ersten Längsachse zusammenklappbar und damit vor bzw. nach der zweckmäßigen Verwendung als ein Warnhinweis auf einen kleinen Bauraum reduzierbar, zur optimierten Lagerung z.B. innerhalb des Kraftfahrzeuges.

Bevorzugter Weise ist die Vorrichtung mit einer Symmetrieachse als erster und einziger Längsachse ausgebildet.

Des Weiteren ist die Befestigungseinheit an einer Scheibenfläche, insbesondere einer Heckscheibe, des Kraftfahrzeuges befestigbar. Insbesondere ist mittels der Befestigungseinheit eine Haftkraft auf die Scheibenfläche ausübbar. Somit wird das Warnsignal anhand der erfindungsgemäßen Vorrichtung auf einfache Weise in einer zweckmäßigen Höhe angeordnet und die Sichtbarkeit für den nachfolgenden Straßenverkehr verbessert. Des Weiteren sind die Scheibenflächen, insbesondere die Heckscheibe, eines Kraftfahrzeuges für eine Person leicht erreichbar. So müssen sich beteiligte Personen nicht zusätzlichen Gefahren zur Anbringung eines Warnhinweis bzw. Warnsignals im Sinne der Vorrichtung aussetzen.

In einer bevorzugten Ausführungsform weist die Befestigungseinheit ein Fixationselement auf, zur Applikation einer Haftkraft entlang der Scheibenfläche des Kraftfahrzeugs, und ein Betätigungselement, zum bedarfsweisen Aufbau der Haftkraft.

So kann durch die Handhabung des Betätigungselementes über das Fixationselement, z.B. im Sinne eines Saugnapfes, eine Haftkraft auf die Scheibenfläche appliziert werden, zur zweckmäßigen Befestigung der Vorrichtung. Es wird eine einfache Handhabung sowie eine kostengünstige Herstellung der Vorrichtung sichergestellt.

Gemäß einer Ausführungsform ist die Vorrichtung anhand der Befestigungseinheit mittels Unterdruck, zur Applikation der Haftkraft, an der Scheibenfläche des Kraftfahrzeuges befestigbar.

So kann die Befestigungseinheit, mit dem Fixationselement und dem Betätigungselement, vorzugsweise im Sinne eines Saugnapfes oder dergleichen zur Aufbringung eines Unterdrucks im verwendungsgemäßen Zustand ausgebildet sein. Es wird eine einfache, zweckmäßige Befestigung der Vorrichtung an einem einfach zugänglichen Punkt entlang des Kraftfahrzeuges ermöglicht.

In einer weiteren Ausführungsform erstreckt sich das Betätigungselement im Wesentlichen seitlich des Fixationselementes.

Somit kann der Bauraum entlang der seitlichen Erstreckung der Vorrichtung auf einfache Weise optimal ausgenutzt werden, wobei die Gesamthöhe der Vorrichtung reduzierbar ist. Des Weiteren kann das Betätigungselement derart angeordnet werden, dass eine einfache Zugänglichkeit und Betätigung gewährleistet ist.

Gemäß einer weiteren bevorzugten Ausführungsform ist die Befestigungseinheit zum Aufbau eines Unterdrucks entlang wenigstens eines Abschnitts von Glasflächen, metallischen Oberflächen und Kunststoffflächen geeignet.

So kann die Vorrichtung an einer beliebigen Stelle auf einfache Weise entlang einer Fahrzeugscheibe oder dergleichen angeordnet werden. Die Vorrichtung bzw. das Warnsignal der erfindungsgemäßen Vorrichtung ist variabel an dem Kraftfahrzeug anordbar sowie eine einfache Zugänglichkeit für Personen sichergestellt ist. Die Anordnung der Vorrichtung auf z.B. einer magnetisch wirkenden Oberfläche, wie einem Metall oder dergleichen, ist nicht notwendig, aber möglich.

In einer Ausführungsform weist die Signaleinheit wenigstens eine aktive Beleuchtung und/oder wenigstens eine Reflektionsfläche auf.

Somit kann ein gut sichtbares Warnsignal bzw. ein geeigneter Warnhinweis mittels der Vorrichtung ausgesendet werden. Insbesondere ist es auch möglich, bei Nacht einen geeigneten Warnhinweis für den nachfolgenden Straßenverkehr bereitzustellen.

Nach einer bevorzugten Ausführungsform weist die Vorrichtung ein Schalterelement und/oder ein Tastelement und/oder ein Lichtsensorelement auf, zur bedarfsweisen Aktivierung der aktiven Beleuchtung der Signaleinheit.

So kann eine aktive Bedienung der Beleuchtung durch eine Person mittels des manuell bedienbaren Schalterelementes vorgesehen sein. Des Weiteren ist es möglich, dass mittels eines Lichtsensorelementes eine automatische Aktivierung der Beleuchtung stattfindet, beispielsweise im Zuge der abnehmenden Tageshelligkeit zum Einbruch der Nacht. Mittels eines Tastelementes ist es vorstellbar, dass die Beleuchtung automatisch aktiviert wird, sobald die Vorrichtung aufgeklappt wird.

Des Weiteren ist es vorstellbar, dass das manuell bedienbare Schalterelement, das Tastelement bzw. das Lichtsensorelement kombiniert vorliegen, wobei das Lichtsensorelement erst beim Auseinanderklappen der Vorrichtung und dem dabei aktivierten Tastelement die Beleuchtung aktivieren kann. Gleichzeitig kann die Beleuchtung mittels des manuell bedienbaren Schalterelementes wiederum manuell deaktivierbar sein.

Somit kann eine zweckmäßige Aktivierbarkeit der aktiven Beleuchtung sichergestellt werden.

In einer Ausführungsform ist die Signaleinheit wenigstens teilweise in der Gehäuseeinheit integriert, insbesondere ist die wenigstens eine aktive Beleuchtung in der Gehäuseeinheit integriert und die wenigstens eine Reflektionsfläche an bzw. entlang einer Vorderseite der Gehäuseeinheit angeordnet.

Somit kann die aktive Beleuchtung, vorzugsweise in Kombination mit einer entsprechenden Steuereinheit sowie einer Energieversorgungseinheit, in der Gehäuseeinheit gekapselt angeordnet sein. Auf diese Weise können elektrische Komponenten vor Regen, Schnee und Schmutz, sowie vor Spritzwasser im Allgemeinen, geschützt sein.

Des Weiteren sind die aktive Beleuchtung und die Reflektionsfläche zweckmäßig an der Vorderseite der Vorrichtung angeordnet, um ein geeignetes Warnsignal aussenden zu können, vorzugsweise kombiniert mit der aktiven Beleuchtung als emittierendes Element und der Reflektionsfläche als reflektierendes Element.

Gemäß einem nebengeordneten Aspekt der Erfindung ist ein Kraftfahrzeug mit einer erfindungsgemäßen Vorrichtung vorgesehen.

So ist es vorstellbar, dass die Vorrichtung in dem Kraftfahrzeug zweckmäßig integriert und an leicht zugänglichen Stellen, vorzugsweise passgenau, im zusammengeklappten Zustand angeordnet ist.

Gemäß einem weiteren nebengeordneten Aspekt ist eine Verwendung der erfindungsgemäßen Vorrichtung oder des erfindungsgemäßen Kraftfahrzeuges vorgesehen, wobei die Vorrichtung als ein Warnsignal, als ein Warnzeichen oder als ein Warndreieck in Kontakt mit einer Scheibenfläche des Kraftfahrzeugs eingesetzt wird. In einer bevorzugten Ausführungsform ist vorgesehen, dass die Verwendung die folgenden Schritte aufweist:
- Aufsetzen der Vorrichtung im zusammengeklappten Zustand auf der Scheibenfläche des Kraftfahrzeuges, insbesondere mittels des Fixationselementes der Befestigungseinheit;
- Betätigung des Betätigungselementes zur zeitweisen Befestigung der Vorrichtung, insbesondere zur zeitweisen Applikation eines Unterdrucks mittels des Fixationselementes entlang wenigstens eines Abschnitts der Scheibenfläche;
- Expandieren der Vorrichtung durch ein Auseinanderklappen entlang der wenigstens einen ersten Längsachse der Vorrichtung.

Somit ist eine einfache Bedienbarkeit und Handhabung der erfindungsgemäßen Vorrichtung bzw. des Kraftfahrzeuges auch in Gefahrensituationen im Straßenverkehr sichergestellt. Insbesondere ist die Herstellung der verwendungsgemäßen Funktion der Vorrichtung zur Aussendung eines Warnsignals vereinfacht und für die Personen unmittelbar ersichtlich.

Des Weiteren kann die Vorrichtung an einer gut sichtbaren sowie einfach erreichbaren Position entlang des Kraftfahrzeuges, vorzugsweise entlang der Heckscheibe, angeordnet werden.

Die Erfindung wird im Folgenden anhand von Ausführungsbeispielen unter Bezug auf die beigefügten schematischen Zeichnungen näher erläutert.

Es zeigen schematisch:
- Fig. 1:: perspektivische Ansicht einer Vorrichtung gemäß einem Ausführungsbeispiel in einem expandierten Zustand;
- Fig. 2:: rückseitige Ansicht der Vorrichtung gemäß Fig. 1;
- Fig. 3:: Seitenansicht der Vorrichtung gemäß Fig. 1;
- Fig. 4:: rückseitige Ansicht der Vorrichtung gemäß Fig. 1 im zusammengeklappten Zustand; und
- Fig. 5:: Seitenansicht der Vorrichtung gemäß Fig. 4.

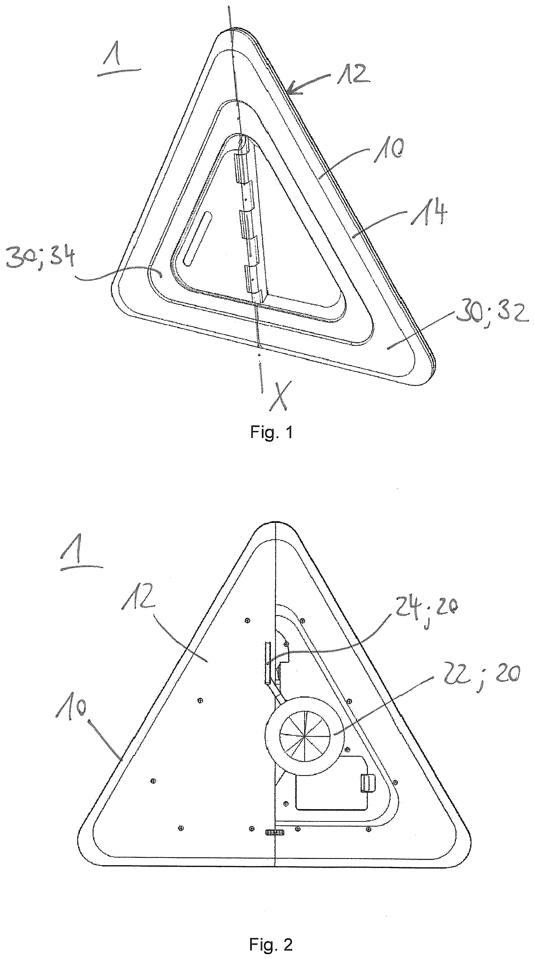

Fig. 1 zeigt eine perspektivische Ansicht einer Vorrichtung 1 gemäß einem Ausführungsbeispiel in einem expandierten Zustand.

Die Vorrichtung 1 weist eine Gehäuseeinheit 10 mit einer Rückseite 12 und einer Vorderseite 14 auf. Die Rückseite 12 stellt im gemäß Fig. 1 gezeigten, expandierten Zustand die eingenommene Grundfläche der Vorrichtung 10 dar.

Die Gehäuseeinheit 10 weist gemäß Fig. 1 die Form eines Warndreieckes auf.

Des Weiteren ist die Vorrichtung 1 mit einer ersten Längsachse X vorgesehen, entlang der die Vorrichtung 1 zusammenklappbar ist. Hierzu kann nach Fig. 1 ein Scharnierelement vorgesehen sein.

Entlang der Vorderseite 14 der Gehäuseeinheit 10 ist eine Signaleinheit 30 mit einer aktiven Beleuchtung 32 und einer Reflektionsfläche 34 vorgesehen. Die aktive Beleuchtung 32 verläuft entlang der Randkontur der Vorderseite 14 der Gehäuseeinheit 10. Die Reflektionsfläche 34 ist gemäß Fig. 1 an einer Innenseite der aktiven Beleuchtung 32 vorgesehen und folgt in ihrer geometrischen Ausgestaltung somit ebenfalls der Warndreieck-förmigen Außenkontur der Vorrichtung 1.

In Fig. 2 ist eine rückseitige Ansicht der Vorrichtung 1 gemäß Fig. 1 dargestellt.

Entlang der Rückseite 12 der Gehäuseeinheit 10 ist eine Befestigungseinheit 20 mit einem Fixationselement 22 und einem Betätigungselement 24 angeordnet.

Das Betätigungselement 24 erstreckt sich im Wesentlichen seitlich des Fixationselementes 22. Somit ist das Betätigungselement 24 gut erreichbar positioniert und kann durch eine zweckmäßige Rotation zur Herstellung eines Unterdrucks mittels dem Fixationselement 22 betätigt werden. In diesem Sinne kann das Fixationselement 22 vorzugsweise als ein Saugnapf oder dergleichen ausgebildet sein, um in Wirkverbindung mit dem Betätigungselement 24 einen Unterdruck, z.B. entlang einer Scheibenfläche wie einer Heckscheibe, bedarfsweise bereitstellen zu können.

Insbesondere ist die Befestigungseinheit außermittig entlang der Rückseite 12 der Gehäuseeinheit 10 positioniert. So ist die Vorrichtung 1 im zusammengeklappten Zustand positionierbar, sowie das Betätigungselement 24 zur Befestigung der Vorrichtung auf vorteilhafte Weise erreichbar und betätigbar ist.

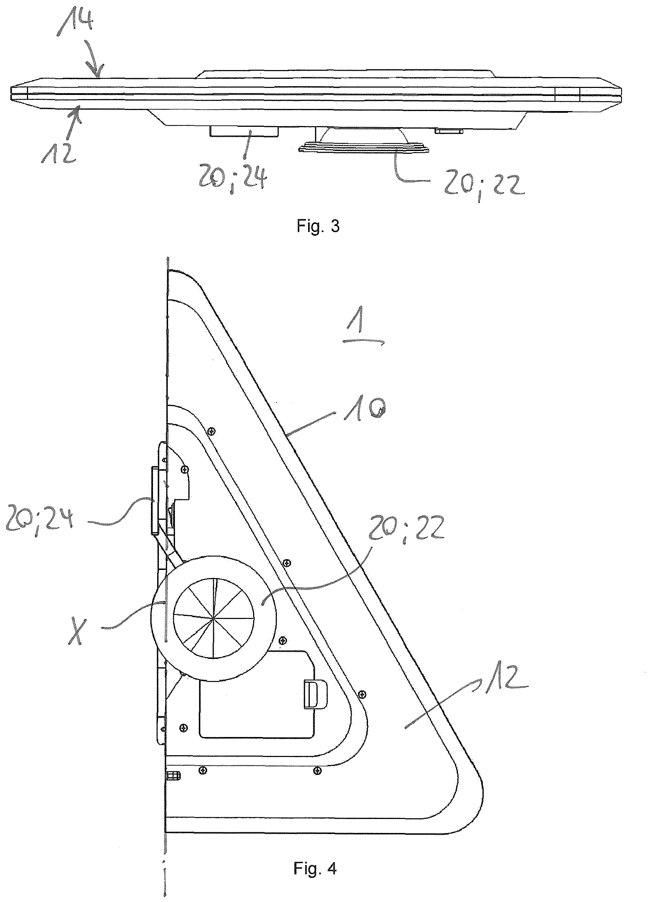

In Fig. 3 ist eine Seitenansicht der Vorrichtung 1 gemäß Fig. 1 gezeigt.

Die Vorderseite 14 und die Rückseite 12 können demnach als der Dickenkontur der Vorrichtung 1 folgend aufgefasst werden.

Die Befestigungseinheit 20 kann mit dem Fixationselement 22, vorzugsweise als ein Saugnapf oder dergleichen ausgebildet, an einer Scheibenoberfläche wie einer Heckscheibe eines Kraftfahrzeuges angeordnet werden. Anschließend kann mittels dem Betätigungselement 24 im Rahmen einer vorzugsweise rotatorischen Bewegung in dem Fixationselement 22 ein Unterdruck aufgebaut werden, sodass eine zweckmäßige Befestigung der Vorrichtung 1 an einer Scheibenoberfläche erzielbar ist.

Fig. 4 zeigt eine rückseitige Ansicht der Vorrichtung gemäß Fig. 1 im zusammengeklappten Zustand.

Die Vorrichtung 1 bzw. die Gehäuseeinheit 10 ist entlang der ersten Längsachse X zusammengeklappt, wodurch die Grundfläche, die die Vorrichtung 1 im zusammengeklappten Zustand einnimmt, gemäß Fig. 4 im Wesentlichen halbiert ist. Somit kann die Vorrichtung 1 auf vorteilhafte Weise in einem Kraftfahrzeug verstaubar sein. Gleichfalls ist eine einfache Herstellung des verwendungsgemäßen Zustandes der Vorrichtung 1 durch ein einfaches Auseinanderklappen der Vorrichtung 1 sichergestellt.

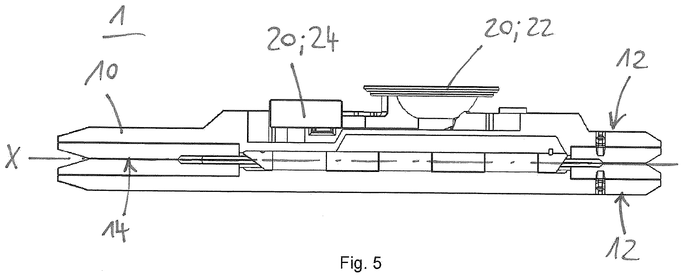

In Fig. 5 ist eine Seitenansicht der Vorrichtung gemäß Fig. 4 dargestellt.

Entlang der ersten Längsachse X ist gemäß Fig. 5 ein Scharnier ausgebildet, sodass die beiden Teile der Vorderseite 14 der Gehäuseeinheit 10 im zusammengeklappten Zustand aufeinanderliegen. Die Rückseite 12 der Gehäuseeinheit 10 bildet somit im zusammengeklappten Zustand eine Außenseite der Vorrichtung 1 aus. Die empfindlichere Vorderseite 14, insbesondere mit der aktiven Beleuchtung 32 bzw. der wenigstens einen Reflektionsfläche 34 wird somit geschützt.

Zusammenfassend wird anhand der erfindungsgemäßen Vorrichtung eine einfach handzuhabende und Bauraum-reduzierte Option für die Bereitstellung eines Warnsignals bzw. eines Warnhinweises zur Verfügung gestellt.

Die Vorrichtung kann auf einfache und vorteilhafte Weise an einer Oberfläche des Kraftfahrzeuges, insbesondere entlang einer Scheibenfläche wie einer Heckscheibe, gut sichtbar positioniert werden.

### Bezugszeichenliste

- 1: Vorrichtung
- 10: Gehäuseeinheit
- 12: Rückseite
- 14: Vorderseite
- 20: Befestigungseinheit
- 22: Fixationselement
- 24: Betätigungselement
- 30: Signaleinheit
- 32: aktive Beleuchtung
- 34: Reflektionsfläche
- X: Längsachse der Vorrichtung

## Patentansprüche

1. Vorrichtung (1) zur wenigstens bedarfsweisen Bereitstellung eines Warnsignals an einem Kraftfahrzeug, mit einer Gehäuseeinheit (10), die in einem expandierten Zustand eine Grundfläche einnimmt, mit einer Befestigungseinheit (20), die an einer Rückseite der Gehäuseeinheit (10) angeordnet ist, und mit einer Signaleinheit (30),
wobei die Vorrichtung (1) entlang wenigstens einer ersten Längsachse (X) zusammenklappbar ist, sodass die Vorrichtung (1) in einem zusammengeklappten Zustand auf einen Teil der Grundfläche der Gehäuseeinheit (1) im expandierten Zustand reduzierbar ist, und
wobei die Vorrichtung (1) mittels der Befestigungseinheit (20) an einer Scheibenfläche des Kraftfahrzeuges wenigstens zeitweise befestigbar ist.

2. Vorrichtung (1) nach Anspruch 1,
**dadurch gekennzeichnet, dass**
die Befestigungseinheit (20) ein Fixationselement (22) aufweist, zur Applikation einer Haftkraft entlang der Scheibenfläche des Kraftfahrzeugs, und ein Betätigungselement (24) aufweist, zum bedarfsweisen Aufbau der Haftkraft.

3. Vorrichtung (1) nach Anspruch 2,
**dadurch gekennzeichnet, dass**
die Vorrichtung (1) anhand der Befestigungseinheit (20) mittels Unterdruck, zur Applikation der Haftkraft, an der Scheibenfläche des Kraftfahrzeuges befestigbar ist.

4. Vorrichtung (1) nach Anspruch 2 oder 3,
**dadurch gekennzeichnet, dass**
sich das Betätigungselement (24) im Wesentlichen seitlich des Fixationselementes (22) erstreckt.

5. Vorrichtung (1) nach einem der vorhergehenden Ansprüche,
**dadurch gekennzeichnet, dass**
die Befestigungseinheit (20) zum Aufbau eines Unterdrucks entlang wenigstens eines Abschnitts von Glasflächen, metallischen Oberflächen und Kunststoffflächen geeignet ist.

6. Vorrichtung (1) nach einem der vorhergehenden Ansprüche,
**dadurch gekennzeichnet, dass**
die Signaleinheit (30) wenigstens eine aktive Beleuchtung (32) und/oder wenigstens eine Reflektionsfläche (34) aufweist.

7. Vorrichtung (1) nach Anspruch 6,
**dadurch gekennzeichnet, dass**
die Vorrichtung (1) ein Schalterelement und/oder ein Tastelement und/oder ein Lichtsensorelement aufweist, zur bedarfsweisen Aktivierung der aktiven Beleuchtung der Signaleinheit.

8. Vorrichtung (1) nach eniem der vorhergehenden Ansprüche, insbesondere nach Anspruch 6,
**dadurch gekennzeichnet, dass**
die Signaleinheit (30) wenigstens teilweise in der Gehäuseeinheit (10) integriert ist, insbesondere die wenigstens eine aktive Beleuchtung (32) in der Gehäuseeinheit integriert ist und die wenigstens eine Reflektionsfläche (34) an einer Vorderseite der Gehäuseeinheit (10) angeordnet ist.

9. Kraftfahrzeug mit einer Vorrichtung (1) nach einem der vorhergehenden Ansprüche.

10. Verwendung einer Vorrichtung (1) oder eines Kraftfahrzeuges nach einem der vorhergehenden Ansprüche, wobei die Vorrichtung (1) als ein Warnsignal, als ein Warnzeichen oder als ein Warndreieck in Kontakt mit einer Scheibenfläche des Kraftfahrzeugs eingesetzt wird.

11. Verwendung nach Anspruch 10,
die folgenden Schritte aufweisend:
- Aufsetzen der Vorrichtung im zusammengeklappten Zustand auf der Scheibenfläche des Kraftfahrzeuges, insbesondere mittels des Fixationselementes (22) der Befestigungseinheit (20);
- Betätigung des Betätigungselemtens (24) zur zeitweisen Befestigung der Vorrichtung (1), insbesondere zur zeitweisen Applikation eines Unterdrucks mittels des Fixationselementes (22) entlang wenigstens eines Abschnitts der Scheibenfläche;
- Expandieren der Vorrichtung (1) durch ein Auseinanderklappen entlang der wenigstens einen ersten Längsachse (X) der Vorrichtung (1).

## Geänderte Patentansprüche

### Geänderte Patentansprüche gemäss Regel 137(2) EPÜ.

**1.** Vorrichtung (1) zur wenigstens bedarfsweisen Bereitstellung eines Warnsignals an einem Kraftfahrzeug, mit einer Gehäuseeinheit (10), die in einem expandierten Zustand eine Grundfläche einnimmt, mit einer Befestigungseinheit (20), die an einer Rückseite der Gehäuseeinheit (10) angeordnet ist, und mit einer Signaleinheit (30),
wobei die Vorrichtung (1) entlang wenigstens einer ersten Längsachse (X) zusammenklappbar ist, sodass die Vorrichtung (1) in einem zusammengeklappten Zustand auf einen Teil der Grundfläche der Gehäuseeinheit (1) im expandierten Zustand reduzierbar ist, und
wobei die Vorrichtung (1) mittels der Befestigungseinheit (20) an einer Scheibenfläche des Kraftfahrzeuges wenigstens zeitweise befestigbar ist, wobei die Befestigungseinheit (20) ein Fixationselement (22) aufweist, zur Applikation einer Haftkraft entlang der Scheibenfläche des Kraftfahrzeugs, und ein Betätigungselement (24) aufweist, zum bedarfsweisen Aufbau der Haftkraft,
wobei die Befestigungseinheit (20) derart versetzt zur der Längsachse (X) entlang einer Rückseite (12) der Gehäuseeinheit (10) positioniert ist, dass die Vorrichtung (1) im zusammengeklappten Zustand positionierbar ist.

**2.** Vorrichtung (1) nach Anspruch 1,
**dadurch gekennzeichnet, dass**
die Vorrichtung (1) anhand der Befestigungseinheit (20) mittels Unterdruck, zur Applikation der Haftkraft, an der Scheibenfläche des Kraftfahrzeuges befestigbar ist.

**3.** Vorrichtung (1) nach Anspruch 1 oder 2,
**dadurch gekennzeichnet, dass**
sich das Betätigungselement (24) im Wesentlichen seitlich des Fixationselementes (22) erstreckt.

**4.** Vorrichtung (1) nach einem der vorhergehenden Ansprüche,
**dadurch gekennzeichnet, dass**
die Befestigungseinheit (20) zum Aufbau eines Unterdrucks entlang wenigstens eines Abschnitts von Glasflächen, metallischen Oberflächen und Kunststoffflächen geeignet ist.

**5.** Vorrichtung (1) nach einem der vorhergehenden Ansprüche,
**dadurch gekennzeichnet, dass**
die Signaleinheit (30) wenigstens eine aktive Beleuchtung (32) und/oder wenigstens eine Reflektionsfläche (34) aufweist.

**6.** Vorrichtung (1) nach Anspruch 5,
**dadurch gekennzeichnet, dass**
die Vorrichtung (1) ein Schalterelement und/oder ein Tastelement und/oder ein Lichtsensorelement aufweist, zur bedarfsweisen Aktivierung der aktiven Beleuchtung der Signaleinheit.

**7.** Vorrichtung (1) nach einem der vorhergehenden Ansprüche, insbesondere nach Anspruch 5,
**dadurch gekennzeichnet, dass**
die Signaleinheit (30) wenigstens teilweise in der Gehäuseeinheit (10) integriert ist, insbesondere die wenigstens eine aktive Beleuchtung (32) in der Gehäuseeinheit integriert ist und die wenigstens eine Reflektionsfläche (34) an einer Vorderseite der Gehäuseeinheit (10) angeordnet ist.

**8.** Kraftfahrzeug mit einer Vorrichtung (1) nach einem der vorhergehenden Ansprüche.

**9.** Verwendung einer Vorrichtung (1) oder eines Kraftfahrzeuges nach einem der vorhergehenden Ansprüche, wobei die Vorrichtung (1) als ein Warnsignal, als ein Warnzeichen oder als ein Warndreieck in Kontakt mit einer Scheibenfläche des Kraftfahrzeugs eingesetzt wird.

**10.** Verwendung nach Anspruch 9,
die folgenden Schritte aufweisend:
- Aufsetzen der Vorrichtung im zusammengeklappten Zustand auf der Scheibenfläche des Kraftfahrzeuges, insbesondere mittels des Fixationselementes (22) der Befestigungseinheit (20);
- Betätigung des Betätigungselements (24) zur zeitweisen Befestigung der Vorrichtung (1), insbesondere zur zeitweisen Applikation eines Unterdrucks mittels des Fixationselementes (22) entlang wenigstens eines Abschnitts der Scheibenfläche;
- Expandieren der Vorrichtung (1) durch ein Auseinanderklappen entlang der wenigstens einen ersten Längsachse (X) der Vorrichtung (1).

**1.** Vorrichtung (1) zur wenigstens bedarfsweisen Bereitstellung eines Warnsignals an einem Kraftfahrzeug, mit einer Gehäuseeinheit (10), die in einem expandierten Zustand eine Grundfläche einnimmt, mit einer Befestigungseinheit (20), die an einer Rückseite der Gehäuseeinheit (10) angeordnet ist, und mit einer Signaleinheit (30),
wobei die Vorrichtung (1) entlang wenigstens einer ersten Längsachse (X) zusammenklappbar ist, sodass die Vorrichtung (1) in einem zusammengeklappten Zustand auf einen Teil der Grundfläche der Gehäuseeinheit (1) im expandierten Zustand reduzierbar ist, und wobei die Vorrichtung (1) mittels der Befestigungseinheit (20) an einer Scheibenfläche des Kraftfahrzeuges wenigstens zeitweise befestigbar ist, wobei die Befestigungseinheit (20) ein Fixationselement (22) aufweist, zur Applikation einer Haftkraft entlang der Scheibenfläche des Kraftfahrzeugs, und ein Betätigungselement (24) aufweist, zum bedarfsweisen Aufbau der Haftkraft,
wobei die Befestigungseinheit (20) derart versetzt zur der Längsachse (X) entlang einer Rückseite (12) der Gehäuseeinheit (10) positioniert ist, dass die Vorrichtung (1) im zusammengeklappten Zustand positionierbar sowie das Betätigungselement (24) der Befestigungseinheit (20) zur Befestigung der Vorrichtung (1) erreichbar ist.

**2.** Vorrichtung (1) nach Anspruch 1,
**dadurch gekennzeichnet, dass**
die Vorrichtung (1) anhand der Befestigungseinheit (20) mittels Unterdruck, zur Applikation der Haftkraft, an der Scheibenfläche des Kraftfahrzeuges befestigbar ist.

**3.** Vorrichtung (1) nach Anspruch 1 oder 2,
**dadurch gekennzeichnet, dass**
sich das Betätigungselement (24) im Wesentlichen seitlich des Fixationselementes (22) erstreckt.

**4.** Vorrichtung (1) nach einem der vorhergehenden Ansprüche,
**dadurch gekennzeichnet, dass**
die Befestigungseinheit (20) zum Aufbau eines Unterdrucks entlang wenigstens eines Abschnitts von Glasflächen, metallischen Oberflächen und Kunststoffflächen geeignet ist.

**5.** Vorrichtung (1) nach einem der vorhergehenden Ansprüche,
**dadurch gekennzeichnet, dass**
die Signaleinheit (30) wenigstens eine aktive Beleuchtung (32) und/oder wenigstens eine Reflektionsfläche (34) aufweist.

**6.** Vorrichtung (1) nach Anspruch 5,
**dadurch gekennzeichnet, dass**
die Vorrichtung (1) ein Schalterelement und/oder ein Tastelement und/oder ein Lichtsensorelement aufweist, zur bedarfsweisen Aktivierung der aktiven Beleuchtung der Signaleinheit.

**7.** Vorrichtung (1) nach einem der vorhergehenden Ansprüche, insbesondere nach Anspruch 5,
**dadurch gekennzeichnet, dass**
die Signaleinheit (30) wenigstens teilweise in der Gehäuseeinheit (10) integriert ist, insbesondere die wenigstens eine aktive Beleuchtung (32) in der Gehäuseeinheit integriert ist und die wenigstens eine Reflektionsfläche (34) an einer Vorderseite der Gehäuseeinheit (10) angeordnet ist.

**8.** Kraftfahrzeug mit einer Vorrichtung (1) nach einem der vorhergehenden Ansprüche.

**9.** Verwendung einer Vorrichtung (1) oder eines Kraftfahrzeuges nach einem der vorhergehenden Ansprüche, wobei die Vorrichtung (1) als ein Warnsignal, als ein Warnzeichen oder als ein Warndreieck in Kontakt mit einer Scheibenfläche des Kraftfahrzeugs eingesetzt wird.

**10.** Verwendung nach Anspruch 9,
die folgenden Schritte aufweisend:
- Aufsetzen der Vorrichtung im zusammengeklappten Zustand auf der Scheibenfläche des Kraftfahrzeuges, insbesondere mittels des Fixationselementes (22) der Befestigungseinheit (20);
- Betätigung des Betätigungselements (24) zur zeitweisen Befestigung der Vorrichtung (1), insbesondere zur zeitweisen Applikation eines Unterdrucks mittels des Fixationselementes (22) entlang wenigstens eines Abschnitts der Scheibenfläche;
- Expandieren der Vorrichtung (1) durch ein Auseinanderklappen entlang der wenigstens einen ersten Längsachse (X) der Vorrichtung (1).

**1.** Vorrichtung (1) zur wenigstens bedarfsweisen Bereitstellung eines Warnsignals an einem Kraftfahrzeug, mit einer Gehäuseeinheit (10), die in einem expandierten Zustand eine Grundfläche einnimmt, mit einer Befestigungseinheit (20), die an einer Rückseite der Gehäuseeinheit (10) angeordnet ist, und mit einer Signaleinheit (30),
wobei die Vorrichtung (1) entlang wenigstens einer ersten Längsachse (X) zusammenklappbar ist, sodass die Vorrichtung (1) in einem zusammengeklappten Zustand auf einen Teil der Grundfläche der Gehäuseeinheit (1) im expandierten Zustand reduzierbar ist, und wobei die Vorrichtung (1) mittels der Befestigungseinheit (20) an einer Scheibenfläche des Kraftfahrzeuges wenigstens zeitweise befestigbar ist, wobei die Befestigungseinheit (20) ein Fixationselement (22) aufweist, zur Applikation einer Haftkraft entlang der Scheibenfläche des Kraftfahrzeugs, und ein Betätigungselement (24) aufweist, zum bedarfsweisen Aufbau der Haftkraft,
wobei die Befestigungseinheit (20) derart versetzt zur der Längsachse (X) entlang einer Rückseite (12) der Gehäuseeinheit (10) positioniert ist, dass die Vorrichtung (1) im zusammengeklappten Zustand positionierbar sowie das Betätigungselement (24) der Befestigungseinheit (20) zur Befestigung der Vorrichtung (1) erreichbar und betätigbar ist.

**2.** Vorrichtung (1) nach Anspruch 1,
**dadurch gekennzeichnet, dass**
die Vorrichtung (1) anhand der Befestigungseinheit (20) mittels Unterdruck, zur Applikation der Haftkraft, an der Scheibenfläche des Kraftfahrzeuges befestigbar ist.

**3.** Vorrichtung (1) nach Anspruch 1 oder 2,
**dadurch gekennzeichnet, dass**
sich das Betätigungselement (24) im Wesentlichen seitlich des Fixationselementes (22) erstreckt.

**4.** Vorrichtung (1) nach einem der vorhergehenden Ansprüche,
**dadurch gekennzeichnet, dass**
die Befestigungseinheit (20) zum Aufbau eines Unterdrucks entlang wenigstens eines Abschnitts von Glasflächen, metallischen Oberflächen und Kunststoffflächen geeignet ist.

**5.** Vorrichtung (1) nach einem der vorhergehenden Ansprüche,
**dadurch gekennzeichnet, dass**
die Signaleinheit (30) wenigstens eine aktive Beleuchtung (32) und/oder wenigstens eine Reflektionsfläche (34) aufweist.

**6.** Vorrichtung (1) nach Anspruch 5,
**dadurch gekennzeichnet, dass**
die Vorrichtung (1) ein Schalterelement und/oder ein Tastelement und/oder ein Lichtsensorelement aufweist, zur bedarfsweisen Aktivierung der aktiven Beleuchtung der Signaleinheit.

**7.** Vorrichtung (1) nach einem der vorhergehenden Ansprüche, insbesondere nach Anspruch 5,
**dadurch gekennzeichnet, dass**
die Signaleinheit (30) wenigstens teilweise in der Gehäuseeinheit (10) integriert ist, insbesondere die wenigstens eine aktive Beleuchtung (32) in der Gehäuseeinheit integriert ist und die wenigstens eine Reflektionsfläche (34) an einer Vorderseite der Gehäuseeinheit (10) angeordnet ist.

**8.** Kraftfahrzeug mit einer Vorrichtung (1) nach einem der vorhergehenden Ansprüche.

**9.** Verwendung einer Vorrichtung (1) oder eines Kraftfahrzeuges nach einem der vorhergehenden Ansprüche, wobei die Vorrichtung (1) als ein Warnsignal, als ein Warnzeichen oder als ein Warndreieck in Kontakt mit einer Scheibenfläche des Kraftfahrzeugs eingesetzt wird.

**10.** Verwendung nach Anspruch 9,
die folgenden Schritte aufweisend:
- Aufsetzen der Vorrichtung im zusammengeklappten Zustand auf der Scheibenfläche des Kraftfahrzeuges, insbesondere mittels des Fixationselementes (22) der Befestigungseinheit (20);
- Betätigung des Betätigungselements (24) zur zeitweisen Befestigung der Vorrichtung (1), insbesondere zur zeitweisen Applikation eines Unterdrucks mittels des Fixationselementes (22) entlang wenigstens eines Abschnitts der Scheibenfläche;
- Expandieren der Vorrichtung (1) durch ein Auseinanderklappen entlang der wenigstens einen ersten Längsachse (X) der Vorrichtung (1).
